# EUROPEAN PATENT APPLICATION

(11) **EP 2 015 490 A1**
(43) Date of publication of application: **14.01.2009**
(21) Application number: 07742229.3
(22) Date of filing: 24.04.2007
(51) Int. Cl.: H04J 11/00

(54) **PILOT SIGNAL TRANSMITTING METHOD, RADIO COMMUNICATION SYSTEM, AND APPARATUS AND PROGRAM USED FOR THE SAME**

(30) Priority: 28.04.2006 JP 2006124580
(71) Applicant: NEC Corporation, Minato-ku Tokyo 108-8001 (JP)
(72) Inventor: KURODA, Nahoko, Tokyo 108-8001 (JP); SATO, Toshifumi, Tokyo 108-8001 (JP); TSUMURA, Soichi, Tokyo 108-8001 (JP)
(74) Representative: Vossius & Partner
(86) International application number: PCT/JP2007/058794
(87) International publication number: WO 2007/125889

(57) **Abstract**

A larger cell uses a pilot pattern with a higher pilot density in a frequency axis direction to improve a channel estimation accuracy when a frequency selective fading variation is large. Meanwhile, a smaller cell uses a pilot pattern with a lower pilot density in the frequency axis direction. A pilot pattern that each base station uses is transmitted to a mobile station in a cell as a report signal.

## Description

### [APPLICABLE FIELD IN THE INDUSTRY]

The present invention relates to a sending technology of a pilot signal that is transmitted from a base station, and more particularly to a pilot signal transmitting method, a radio communication system, and an apparatus and a program used for the same.

### [BACKGROUND ART]

OFDM (Orthogonal Frequency Division Multiplexing), which is more excellent in frequency utilization efficiency as compared with a usual modulation technique and more resistant to frequency-selectivity fading that becomes a subject of discussion in a mobile communication system, has recently attracted an attention, and has been put to practical use for a radio LAN system of 2.5 MHz or 5.2 GHz. Further, an introduction as well thereof into a downlink in Evolved UTRA (E-UTRA) that is being investigated in 3GPP (3rd Generation Partnership Project) is being planned (for example, Non-patent document 1).

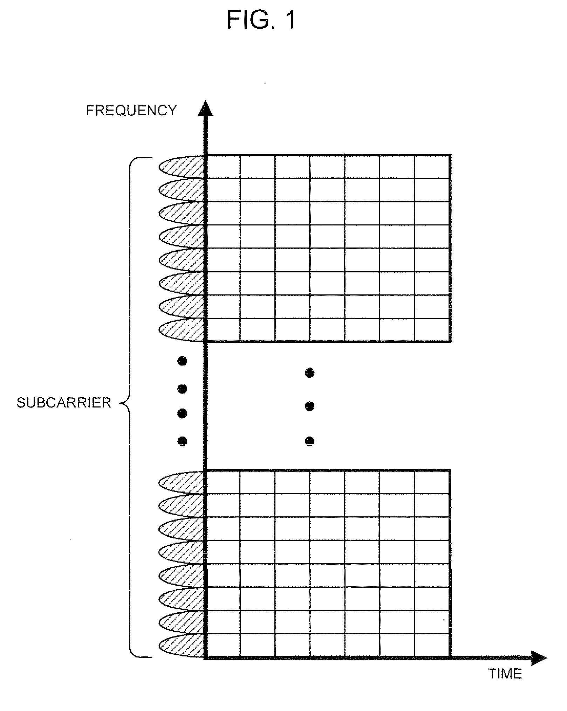

In the OFDM, a transmission band is divided into a plurality of subcarriers, and an information symbol is transmitted with each subcarrier. Thus, as shown in Fig. 1, in the transmission technique employing the OFDM, the information symbol is multiplexed in a two-dimensional direction, i.e. a frequency axis direction and a time axis direction.

On the other hand, fading occurs due to a delay wave in a multipath fading channel. The fading causes both of a time characteristic as well as a frequency characteristic of a reception wave to fluctuate. An influence upon the time characteristic is governed by a mobile speed of a mobile station, and the faster the mobile speed is, the faster a fading-fluctuation speed becomes. Further, An influence upon the frequency characteristic is governed by a delay spread indicating a spread of the delay time, and the larger the delay spread is, the smaller a coherent bandwidth becomes. Herein, the so-called coherent bandwidth, which is a basic parameter expressing the frequency-selectivity fading, signifies a minimum frequency width of which a correlativity of the frequency characteristic is equal to or more than a predetermined value. Thus, that the coherent bandwidth becomes small means a large fluctuation in the frequency characteristic caused by the fading in terms of an identical bandwidth.

When a fading fluctuation period is relatively shorter than a sampling period of the information symbol, it becomes difficult to correctly determine the information symbol because a phase and amplitude of a signal wave fluctuate due to the fading fluctuation. Solving such a point at issue necessitates transmitting reference points of the phase and the amplitude together with the information symbol. For this, a known signal sequence is transmitted together with a data, and information, being a phase reference and an amplitude reference, is conveyed to a reception side. Such a known signal sequence is called a pilot signal. The reception side employs the reference points of the phase and the amplitude being obtained from the pilot signal, thereby to estimate a fluctuation in the phase and the amplitude at other symbols, and to demodulate the signal by correction. As a rule, the characteristic of a fluctuation in the phase and the amplitude in a communication channel is called a channel characteristic, and the estimation of the channel characteristic based upon the pilot signal is called channel estimation.

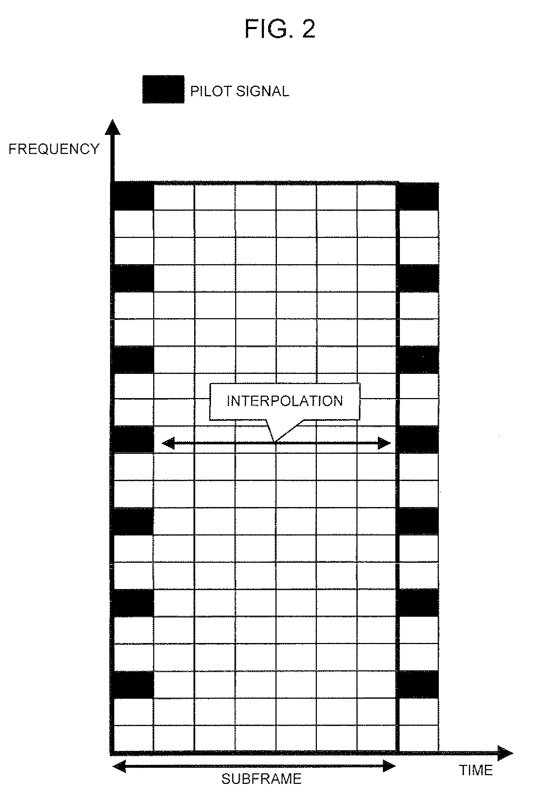

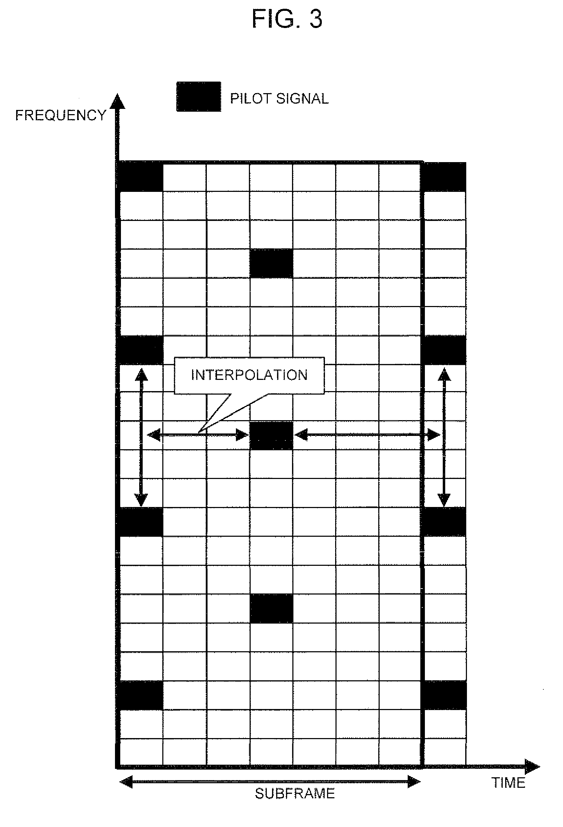

As mentioned previously, the fading causes both of the frequency characteristic as well as the time characteristic to fluctuate, and further, in the OFDM, the information symbol is multiplexed in both directions of the frequency axis as well as the time axis. Thus, as a rule, in the OFDM, the pilot signal is multiplexed in both directions of the frequency axis as well as the time axis. In the E-UTRA in the 3GPP, the method of multiplexing the pilot signal within a subframe, being a unit transmission time, is being discussed, and the method of multiplexing the pilot signal only to one OFDM symbol within one subframe as shown in Fig. 2, and the method of multiplexing the pilot signal to a plurality of OFDM symbols within one subframe as shown in Fig. 3 can be listed as a candidate.
Non-patent document 1: 3GPP TR25.814 v0.5.0 (2005-11) 3rd Generation Partnership Project; Technical Specification Group Radio Access Network; Physical Layer Aspects for Evolved UTRA (Release 7)

### [DISCLOSURE OF THE INVENTION]

### [PROBLEMS TO BE SOLVED BY THE INVENTION]

As mentioned previously, the pilot signal, which is a known signal sequence, cannot transmit the data signal. Thus, from a viewpoint of use efficiency of radio resources, the pilot signal is, as to speak, an overhead, and it is desirable to transmit only a minimum that enables a channel estimation, precision to be kept at a desired quality. Thus, as a rule, in a downlink, the common pilot signal that all mobile stations within the cell employ in common is transmitted, thereby to save a ratio of the radio resources that are used for the pilot signal.

However, as mention previously, the channel fluctuation due to the fading exists in both of the time axis direction as well as the frequency axis direction, and a fluctuation pitch differs depending upon the mobile speed (Doppler velocity) and the cell environment (delay spread) of the mobile station, respectively. That is, there is a problem that the method of multiplexing the optimum pilot signal necessary for keeping a desired channel estimation precision as well as the signal density differs mobile station by mobile station, or cell environment by cell environment.

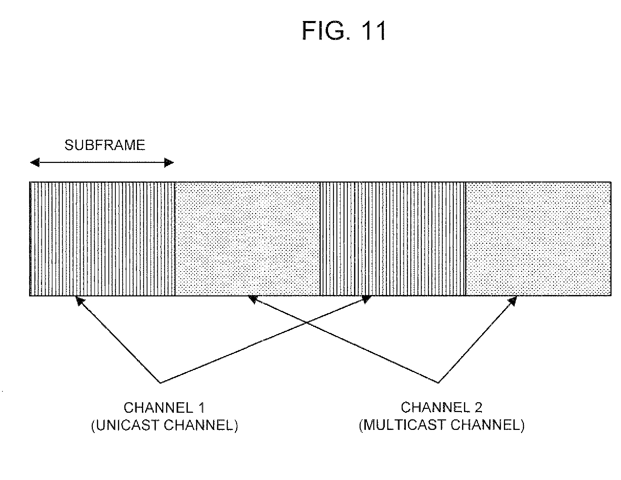

Further, as shown in Fig. 2, interpolating the channel estimation calculated from the pilot signal of each subframe and the channel estimation calculated from the pilot signal of the next subframe makes it possible to demodulate a data symbol based upon a channel estimation result having a time fluctuation within the subframe taken into consideration. However, as shown in Fig. 11, there is the case that when the different channel is time-multiplexed subframe by subframe, the mobile station cannot receive the continuous subframes. As one example, the case that a unicast channel for transmitting a data to a separate mobile station, and a multicast channel for transmitting a data to a plurality of mobile stations are time-multiplexed subframe by subframe is thinkable. In this case, in order that the multicast channel transmits a data to indefinite mobile stations within a cell, a possibility that a so-called soft handover, which enables simultaneous reception of a data from neighboring base stations so that a data having a desired quality can be obtained also at a cell edge, is employed is high. Realizing this soft handover necessitates assuming a frame configuration in which a data can be received even though a transmission timing between the base stations has not been completely synchronized, and this frame configuration is envisaged to differ from the frame configuration of the unicast channel. Thus, there is the case that the mobile station, which is receiving the unicast channel, cannot receive the multicast channel, and the channel estimation utilizing the pilot signal of the next subframe as described above becomes impossible, which causes a problem that the channel estimation precision deteriorates.

Further, in the OFDM, the characteristic largely deteriorates due to interference by the neighboring cells; however, as a rule, the pilot signal is transmitted with a large power such that the mobile station as well being located at a cell edge can receive the pilot signal having a sufficient quality. Thus, in the system in which the transmission timing between the neighboring cells has been synchronized to a certain extent, the neighboring base station companions transmit the pilot signal to each other with a large power at an identical timing and in an identical subcarrier, which causes a problem that the pilot signal of the neighboring cell becomes large interference to the mobile station being located at a cell edge, and resultantly the channel estimation deteriorates.

An object of the present invention is to provided a pilot signal transmitting method, a radio communication system, and an apparatus and a program used for the same that enables the above-mentioned problems to be solved.

### [MEANS FOR SOLVING THE PROBLEMS]

The 1st invention for solving the above-mentioned problems, which is a pilot signal transmitting method, characterized in comprising: a step in which a base station transmits a common pilot signal to one mobile station or more based upon a pattern that is included in a predetermined signal pattern candidate; a step in which said mobile station identifies the pattern of the common pilot signal that said base station transmits; and a step in which said mobile station receives said common pilot signal based upon said identified pattern.

The 2nd invention for solving the above-mentioned problem, in the above-mentioned 1st invention, is characterized in deciding the pattern of the common pilot signal that said base station uses, responding to a cell environment of said base station.

The 3rd invention for solving the above-mentioned problem, in the above-mentioned 1st or 2nd inventions, is characterized in deciding the pattern of the common pilot signal that said base station uses, responding to a delay spread of a cell of said base station.

The 4th invention for solving the above-mentioned problem, in the above-mentioned 3rd invention, is characterized in deciding the pattern of the common pilot signal that said base station uses, responding to a cell size of said base station.

The 5th invention for solving the above-mentioned problem, in one of the above-mentioned 1st to 4th inventions, is characterized in deciding the pattern of the common pilot signal that said base station uses, responding to a speed of the mobile station existing within a cell of said base station.

The 6th invention for solving the above-mentioned problem, in one of the above-mentioned 1st to 5th inventions, is characterized in deciding the pattern of the common pilot signal that said base station uses, responding to a kind of channels that said base station transmits.

The 5th invention for solving the above-mentioned problem, in one of the above-mentioned 1st to 6th inventions, is characterized in deciding the pattern of the common pilot signal that said base station uses, responding to the pattern of the common pilot signal that a base station neighboring said base station transmits.

The 8th invention for solving the above-mentioned problem, in one of the above-mentioned 1st to 7th inventions, is characterized in that said signal pattern is information for specifying a number of pilot symbols that are multiplexed within a unit transmission time in a predetermined transmission frequency.

The 9th invention for solving the above-mentioned problem, in one of the above-mentioned 1st to 8th inventions, is characterized in said signal pattern is information for specifying a number of pilot symbols that are multiplexed within a unit transmission frequency at a predetermined transmission timing.

The 10th invention for solving the above-mentioned problem, in one of the above-mentioned 1st to 9th inventions, is characterized in that, in a radio communication system based upon an orthogonal Frequency Division Multiplexing (OFDM) technique, said signal pattern is defined as a pattern of a pilot symbol that is multiplexed within a predetermined unit transmission time as well as a frequency grid.

The 11th invention for solving the above-mentioned problem, in one of the above-mentioned 1st to 10th inventions, is characterized in that said base station notifies information associated with said pattern of said common pilot signal, which said base station is transmitting, to the mobile station with a downlink channel.

The 12the invention for solving the above-mentioned problem, in the above-mentioned 11th invention, is characterized in that said downlink channel is a broadcast channel that is transmitted to the mobile station existing within a cell of said base station.

The 13the invention for solving the above-mentioned problem, in the above-mentioned 11th or 12th inventions, is characterized in that: said signal pattern candidate includes a reference pattern known to said mobile station; and said mobile station receives the common pilot signal based upon said reference pattern before acquiring information associated with the pattern of the common pilot signal that said base station is transmitting.

The 14the invention for solving the above-mentioned problem, in the above-mentioned 13 invention, is characterized in that said reference pattern is a pattern based upon a symbol position that is included in all patterns of said pattern candidates in common.

The 15th invention for solving the above-mentioned problem, in one of the above-mentioned 1st to 14th inventions, is characterized in that said mobile station identifies the pattern of the common pilot signal that said base station is transmitting, based upon information associated with said signal pattern candidate, and a reception signal from said base station.

The 16th invention for solving the above-mentioned problem, in the above-mentioned 15th invention, is characterized in that, so as to allow correlativity with a pilot signal sequence based upon a not-yet-used signal pattern to lower, said base station multiplexes a data symbol in a position where an overlap with said not-yet-used signal pattern is generated.

The 17th invention for solving the above-mentioned problem, in the above-mentioned 16the invention, is characterized in that said base station multiplies the data symbol, which is multiplexed to a position where an overlap with said not-yet-used signal pattern is generated, by a bit sequence known to said mobile station, and transmits it.

The 18th invention for solving the above-mentioned problems, which is a radio communication system, characterized in comprising: a base station comprising a pilot signal transmitting means for transmitting a common pilot signal to one mobile station or more based upon a pattern that is included in a predetermined signal pattern candidate; and a mobile station comprising an identifying means for identifying the pattern of the common pilot signal that said base station transmits, and a common pilot signal receiving means for receiving said common pilot signal based upon said identified pattern.

The 19th invention for solving the above-mentioned problem, in the above-mentioned 18th invention, is characterized in that said pilot signal transmitting means decides the pattern of the common pilot signal that said base station uses, responding to a cell environment of the base station.

The 20the invention for solving the above-mentioned problem, in the above-mentioned 18th or 19th inventions, is characterized in that said pilot signal transmitting means decides the pattern of the common pilot signal that said base station uses, responding to a delay spread of a cell of the base station.

The 21st invention for solving the above-mentioned problem, in the above-mentioned 20th invention, is characterized in that said pilot signal transmitting means decides the pattern of the common pilot signal that said base station uses, responding to a cell size of said base station.

The 22nd invention for solving the above-mentioned problem, in one of the above-mentioned 18the to 21st inventions, is characterized in that said pilot signal transmitting means decides the pattern of the common pilot signal that said base station uses, responding to a speed of the mobile station existing within a cell of said base station.

The 23rd invention for solving the above-mentioned problem, in one of the above-mentioned 18the to 22nd inventions, is characterized in that said pilot signal transmitting means decides the pattern of the common pilot signal that said base station uses, responding to a kind of channels that said base station transmits.

The 24th invention for solving the above-mentioned problem, in one of the above-mentioned 18the to 23rd inventions, is characterized in that said pilot signal transmitting means decides the pattern of the common pilot signal that said base station uses, responding to the pattern of the common pilot signal that a base station neighboring said base station transmits.

The 25th invention for solving the above-mentioned problem, in one of the above-mentioned 18the to 24th inventions, is characterized in that said signal pattern is information for specifying a number of pilot symbols that are multiplexed within a unit transmission time in a predetermined transmission frequency.

The 26th invention for solving the above-mentioned problem, in one of the above-mentioned 18th to 25th inventions, is characterised in that said signal pattern is information for specifying a number of pilot symbols that are multiplexed within a unit transmission frequency at a predetermined transmission timing.

The 27th invention for solving the above-mentioned problem, in one of the above-mentioned 18th to 26th inventions, is characterized in that, in a radio communication system based upon an orthogonal Frequency Division Multiplexing (OFDM) technique, said signal pattern is defined as a pattern of a pilot symbol that is multiplexed within a predetermined unit transmission time as well as a frequency grid.

The 28th invention for solving the above-mentioned problem, in one of the above-mentioned 18th to 26th inventions, is characterized in that said base station comprises a means for notifying information associated with said pattern of said common pilot signal, which said base station is transmitting, to the mobile station with a downlink channel.

The 29th invention for solving the above-mentioned problem, in the above-mentioned 28th invention, is characterized in that said downlink channel is a broadcast channel that is transmitted to the mobile station existing within a cell of said base station.

The 30th invention for solving the above-mentioned problem, in the above-mentioned 28th or 29th inventions, is characterized in that: said signal pattern candidate includes a reference pattern known to said mobile station; and said common pilot signal receiving means of said mobile station receives the common pilot signal based upon said reference pattern before acquiring information associated with the pattern of the common pilot signal that said base station is transmitting.

The 31st invention for solving the above-mentioned problem, in the above-mentioned 30th invention, is characterized in that said reference pattern is a pattern based upon a symbol position that is included in all patterns of said pattern candidates in common.

The 32nd invention for solving the above-mentioned problem, in one of the above-mentioned 18th to 31st inventions, is characterized in that said identifying means of said mobile station identifies the pattern of the common pilot signal that said base station is transmitting, based upon information associated with said signal pattern candidate, and a reception signal from said base station.

The 33rd invention for solving the above-mentioned problem, in the above-mentioned 32nd invention, is characterized in that, so as to allow correlativity with a pilot signal sequence based upon a not-yet-used signal pattern to lower, said pilot signal transmitting means of said base station multiplexes a data symbol in a position where an overlap with said not-yet-used signal pattern is generated.

The 34th invention for solving the above-mentioned problem, in the above-mentioned 32nd or 33rid inventions, is characterized in that said pilot signal transmitting means of said base station multiplies the data symbol, which is multiplexed to a position where an overlap with said not-yet-used signal pattern is generated, by a bit sequence known to said mobile station, and transmits it.

The 35th invention for solving the above-mentioned problems, which is a base station in a radio communication system in which a mobile station identifies a pattern of a common pilot signal that is transmitted from the base station, and receives said common pilot signal based upon said identified pattern, characterized in comprising a means for transmitting the common pilot signal to one mobile station or more based upon the pattern that is included in a predetermined signal pattern candidate.

The 36th invention for solving the above-mentioned problems, which is a program of a base station in a radio communication system in which a mobile station identifies a pattern of a common pilot signal that is transmitted from the base station, and receives said common pilot signal based upon said identified pattern, characterized in causing the base station to execute a process of transmitting the common pilot signal to one mobile station or more based upon the pattern that is included in a predetermined signal pattern candidate.

The 37th invention for solving the above-mentioned problems, which is a program of a mobile station in a radio communication system in which a base station transmits a common pilot signal to one mobile station or more based upon a pattern that is included in a predetermined signal pattern candidate, characterized in causing the mobile station to execute the processes: identifying the pattern of the common pilot signal that the base station transmits; and receiving said common pilot signal based upon said identified pattern.

### [AN ADVANTAGEOUS EFFECT OF THE INVENTION]

The present invention enables transmission of the minimum common pilot signal for keeping a desired channel estimation precision responding to the cell environment of the base station, makes it possible to enhance the communication quality and to curtail the overhead, and makes it possible to enhance a user throughput as well as a system throughput.

Further, the present invention makes it possible to use the pilot pattern of the common pilot signal suitable for each base station responding to the cell environment and a service being provided, and makes it possible to enhance use efficiency of the radio resources while enhancing the channel estimation precision. Thus, an effect that the system throughput as well as the user throughput is improved is obtained.

In addition hereto, the present invention makes it possible to use the pilot pattern that differs for each the neighboring cell companion, and thus makes it possible to reduce interference due to a collision of the pilot symbol companions between the neighboring cells, which gives rise to an effect that the channel estimation precision is enhanced, and the system throughput as well as the user throughput is improved.

### [BRIEF DESCRIPTION OF THE DRAWINGS]

[Fig. 1] Fig. 1 is a view for explaining a conceptual diagram of the OFDM modulation technique.
[Fig. 2] Fig. 2 is a view illustrating one example of the pilot signal pattern.
[Fig. 3] Fig. 3 is a view illustrating one example of the pilot signal pattern.
[Fig. 4] Fig. 4 is a view for explaining a system configuration in an example 1.
[Fig. 5] Fig. 5 is a view for explaining the pilot signal pattern that is employed in the example 1.
[Fig. 6] Fig. 6 is a view for explaining a configuration of the base station that is employed in the example 1.
[Fig. 7] Fig. 7 is a view for explaining a configuration of the mobile station that is employed in the example 1.
[Fig. 8] Fig. 8 is a view for explaining an operational flow of the mobile station that is employed in the example 1.
[Fig. 9] Fig. 9 is a view for explaining one example of the method of estimating the channel.
[Fig. 10] Fig. 10 is a view for explaining the pilot signal pattern that is employed in an example 2.
[Fig. 11] Fig. 11 is a view for explaining the channel that the base station in an example 3 transmits.
[Fig. 12] Fig. 12 is a view for explaining the pilot signal pattern that is employed in an example 4.
[Fig. 13] Fig. 13 is a view for explaining a configuration of the mobile station that is employed in the example 4.

### [DESCRIPTION OF NUMERALS]

- 401 and 402: base stations
- 411 and 413: mobile stations
- 421 and 422: cells
- 601: memory
- 602: pilot signal generating section
- 603: report signal generating section
- 604: encoding section
- 605: modulating section
- 607: transmission processing section
- 701: reception processing section
- 702: signal separating section
- 703: channel estimating section
- 704: demodulating section
- 705: decoding section

### [BEST MODE FOR CARRYING OUT THE INVENTION]

The characteristic of the present invention lies in a point of (1) enabling the pattern of the different common pilot signal (hereinafter, referred to as a pilot pattern) to be set responding to the cell environment of the base station and (2) enabling the mobile station within the cell to identify the pilot pattern that the base station is using. The present invention, as shown below, provides a plurality of the methods for realizing these characteristics, and so as to realize the characteristic 1) and the characteristic 2), any combination may be used, and the methods of realizing the identical characteristic may be combined in plural, and used.

1) The methods of setting the different pilot pattern responding to the cell environment of the base station are described below.

i) The pilot pattern is set based upon the delay spread of the cell.

ii) The pilot pattern is set based upon an average speed of the mobile station.

iii) The pilot pattern is set based upon a kind of the channels that are time-multiplexed.

iv) The pilot pattern is set based upon the pilot pattern that the neighboring base station transmits.

2) The methods in which the mobile station identifies the pilot pattern that the base station is using are described below.

i) The base station notifies the pilot pattern to the indefinite mobile stations within the cell as a report signal.

ii) The mobile station makes a blind determination.

Hereinafter, a combination of these realizing methods will be explained in details.

### EXAMPLE 1

In the example 1, the case that 1)-i) the pilot pattern is set based upon the delay spread of the cell, and 2)-i) the pilot pattern is transmitted to the indefinite mobile stations within the cell as a report signal will be explained.

As explained in the background art, the fluctuation due to the frequency-selectivity fading differs depending upon the delay spread of the multipath, and the larger the delay spread is, the smaller the coherent bandwidth becomes. That the coherent bandwidth is small means a large fluctuation in the frequency characteristic in terms of the identical frequency bandwidth, whereby it is necessary to multiplex the pilot signal in such a manner that the pilot density in the frequency axis direction is higher, and to enhance the channel estimation precision. On the other hand, when the coherent bandwidth is larger, fewer pilot signals may be multiplexed in the frequency axis direction because a fluctuation in the frequency characteristic is small. As a rule, a plurality of the pilot signals have been multiplexed within the unit transmission time and frequency (hereinafter, referred to as a subframe), the channel estimation is carried out based upon each pilot signal, and the channel estimation is carried out by making an interpolation for the time or frequency block in which no pilot signal exists.

Further, the delay spread is an index indicating a spread of the delay time of the delay wave, and as a rule, when a cell size is larger, the delay spread as well is inclined to become larger all the more. Thereupon, in this example, a configuration is made so that the pilot pattern is changed responding to a size of the cell. Specifically, the pilot pattern with a higher pilot density in the frequency axis direction is used in a larger cell to enhance the channel estimation precision in the case that a fluctuation in the frequency-selectivity fading is large. On the other hand, the pilot pattern with a lower pilot density in the frequency axis direction is used in a smaller cell to reduce the overhead due to the pilot signal and to enhance use efficiency of the radio resources.

Further, so as to use the pilot signal as a reference signal for estimating the channel, fluctuation, the pilot pattern has to be known to the mobile station. Thus, in this example, the pilot pattern, which each base station is using, is to be transmitted as a report signal to the mobile station within the cell.

### [SYSTEM CONFIGURATION]

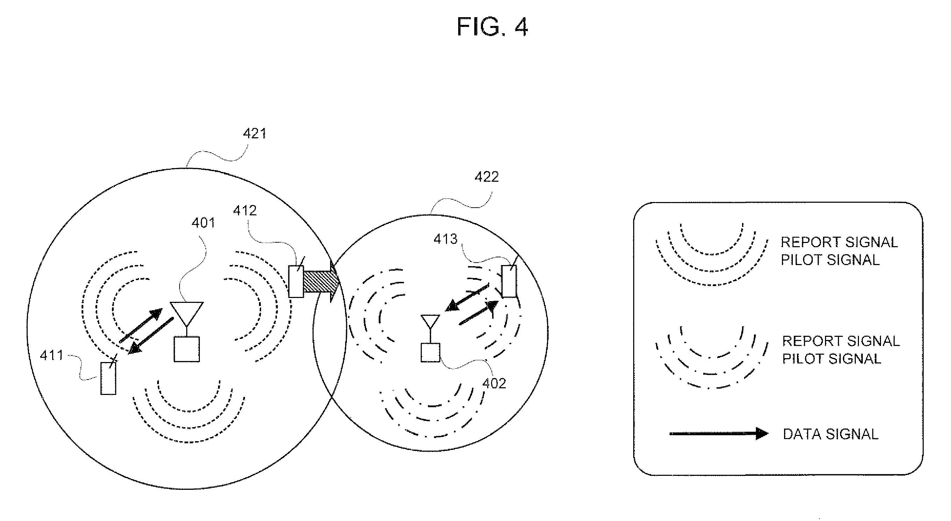

Fig. 4 is a view for explaining a system configuration that is employed in this example.

The system in this example is comprised of base stations 401 and 402, cells 421 and 422, each of which is a covering area of transmission/reception of each base station, and mobile stations 411 to 413, each of which make transmission/reception with each base station. The base stations 401 and 402 transmit the report signal and the common pilot signal as a signal common to the mobile stations within the cell by employing the OFDM modulation. Further, they also make transmission/reception of a data as a separate signal for each mobile station. As shown in Fig. 4, the signal patterns of the common pilot signals that are being transmitted differ from each other because the area radius that the cell 421 covers is larger than that of the cell 422.

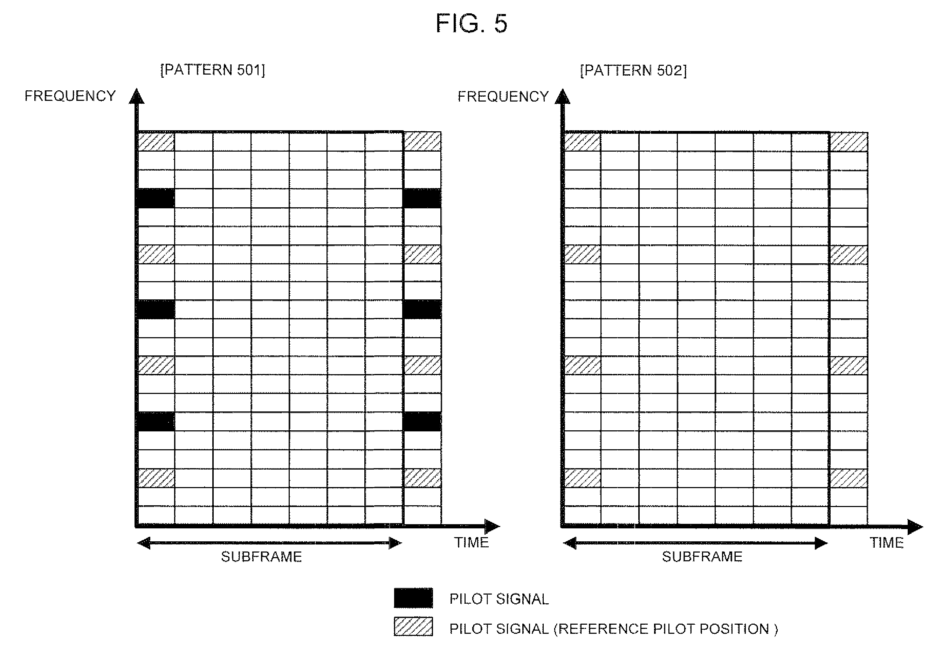

Fig. 5 is a view for explaining the pilot pattern that is employed in this example.

A pattern 501 is a pilot pattern that the base station 401 is transmitting, and a pattern 502 is a pilot pattern that the base station 402 is transmitting. Further, the black portion or the oblique-line portion indicates the pilot signal, and the oblique-line portion of both pilot patterns is a reference pilot position to which the pilot signal has been multiplexed. Hereinafter, the pattern in only the reference pilot position is called a reference pilot pattern. The reference pilot pattern, which is prespecified, is a pattern known to all mobile stations. Thus, the mobile station, at the moment of starting reception of the signal from a new base station, firstly carries out the channel estimation by using the pilot signal multiplexed to the reference pilot pattern, and receives the report signal. The report signal includes information associated with the pilot pattern that this base station is using, whereby the mobile station, after having acquired this pilot pattern information, is enabled to carry out the channel estimation by employing all pilot signals that this base station is transmitting. The base station 401 is expected to have a large delay spread because the cell radius is large, and thus, makes it a rule to use the pattern 501 of which a multiplexing rate of the pilot signal in the frequency axis direction is high. On the other hand, the base station 402 is expected to have a small delay spread because the cell radius is small, and thus, makes it a rule to use the pattern 502 of which a multiplexing rate of the pilot signal in the frequency axis direction is low. Herein, each of these pilot patterns is a pattern that is pre-set based upon the cell size before establishing the base station.

### [BASE STATION]

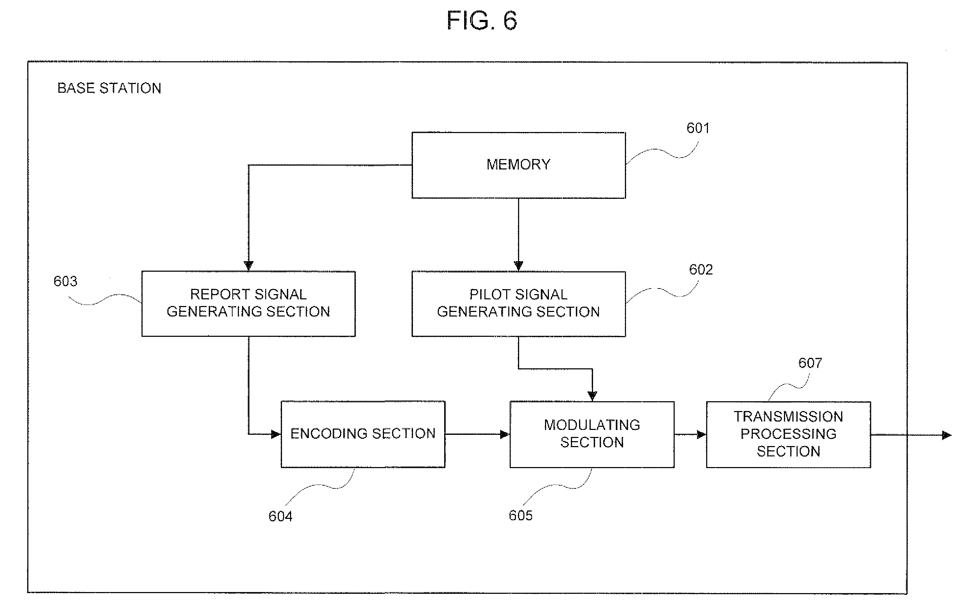

Fig. 6 is a view for explaining a configuration of the base station that is employed in this example.

The base station in this example is comprise of a memory 601 for recording information of setting the base station, a pilot signal generating section 602, a report signal generating section 603 for notifying system information etc., an encoding section 604 for encoding a report signal, a modulating section 605 for modulating the encoded report signal and the pilot signal, and a transmission processing section 607 for performing the processes necessary for transmission, for example, the process of performing an WEFT transform of the modulated signal to carry out napping to the subcarrier, and transmitting it. Additionally, herein, only components that are required in the present invention are shown, and general-purpose base station components other than these are omitted.

Into the memory, system setting information of the base station has been recorded, and information as well associated with the pilot pattern decided based upon the cell size etc. of the expected base station has been recorded. This pilot pattern information is notified to the pilot signal generating section 602, and to the report signal generating section 603 as well. The pilot signal generating section 602 generates the pilot signal of the notified pilot pattern, and sends it to the modulating section 605. Further, the report signal generating section 603 generate a control signal by incorporating the pilot pattern information into system information, and sends it to the encoding section 604.

### [MOBILE STATION]

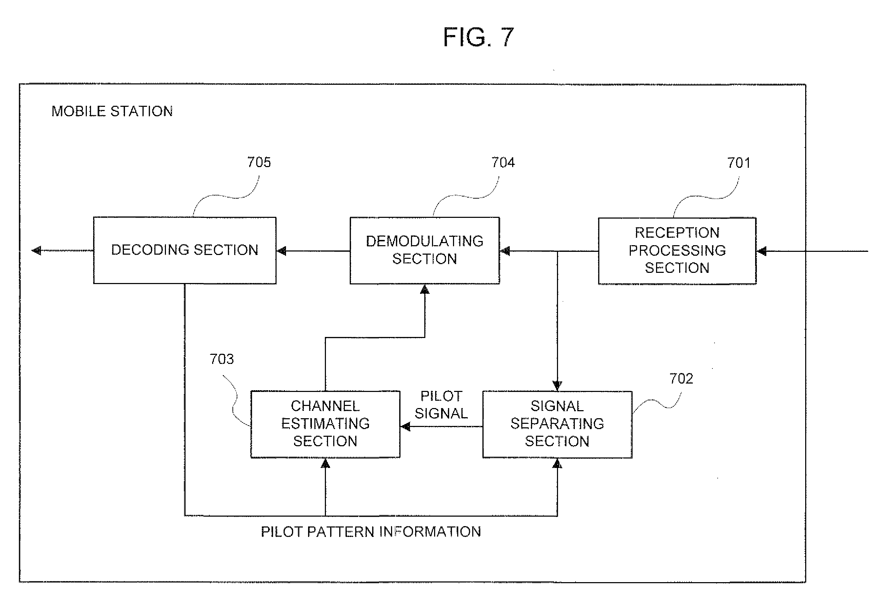

Fig. 7 is a view for explaining a configuration of the mobile station that is employed in this example.

The mobile station in this example is comprised of a reception processing section 701 for receiving a signal of a predetermined frequency band at a predetermined timing, a signal separating section 702 for separating a pilot signal portion from the received signal, a channel estimating section 703 for carrying out a channel estimation from the separated pilot signal, a demodulating section 704 for making a modulation based upon the reception signal and the channel estimation value, and a decoding section 705. Additionally, herein, only components that are required in the present invention are shown, and general-purpose mobile station components other than these are omitted.

The signal separating section 702, when receiving a signal of a new base station, separates only a signal multiplexed to the symbol that corresponds to the reference pilot pattern based upon the reference pilot pattern information recorded into the memory that is not shown in the figure, and sends it to the channel estimating section 703. And, the signal separating section 702 uses this channel estimation, thereby to acquire pilot pattern information that is being used by the base station that is receiving/decoding and using the report signal. The acquired pilot pattern information is notified to the signal separating section 702 as well as to the channel estimating section 703, and the signal separating section 702 sends a signal of the portion that corresponds to the pilot signal to the channel estimating section 703, based upon the notified pilot pattern. The channel estimating section 703 carries out the channel estimation based upon the notified pilot pattern, and sends it to the demodulating section 704.

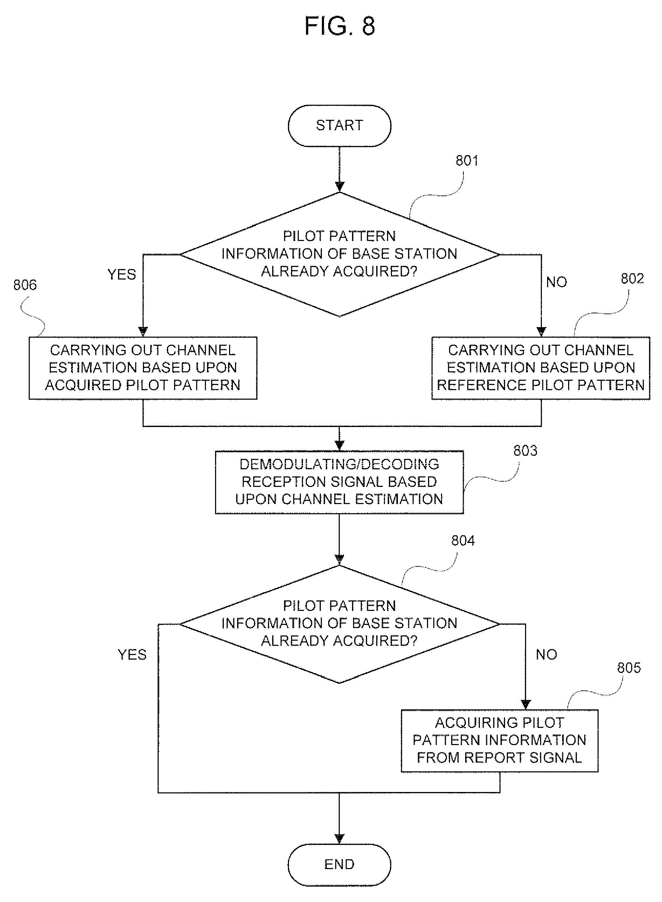

Fig. 8 is a view for explaining a flow of the reception operation that is performed for each subframe by the mobile station that is employed in this example.

When the mobile station has not acquired the pilot pattern information of the base station yet (801, NO), the signal separating section 702 as well as the channel estimating section 703 carry out the pilot signal separation as well as the channel estimation based upon the reference pilot pattern, respectively (802), the demodulation section 704 demodulates the reception signal such as the report signal by employing this channel estimation, the decoding section 705 decodes it and takes out information (803). On the other hand, when the mobile station has already acquired the pilot pattern information of the base station (801, YES), the signal separating section 702 as well as the channel estimating section 703 carry out the channel estimation based upon the pilot pattern that the base station is using (806), the demodulation section 704 demodulates the reception signal by employing this channel estimation, and the decoding section decodes it (803). In addition hereto, when the mobile station has not acquired the pilot pattern information of the base station yet (804, NO), it extracts pilot pattern information that is included in the decoded report signal, and sends the extracted pilot pattern information to the signal separating section as well as the channel estimating section 703 (805).

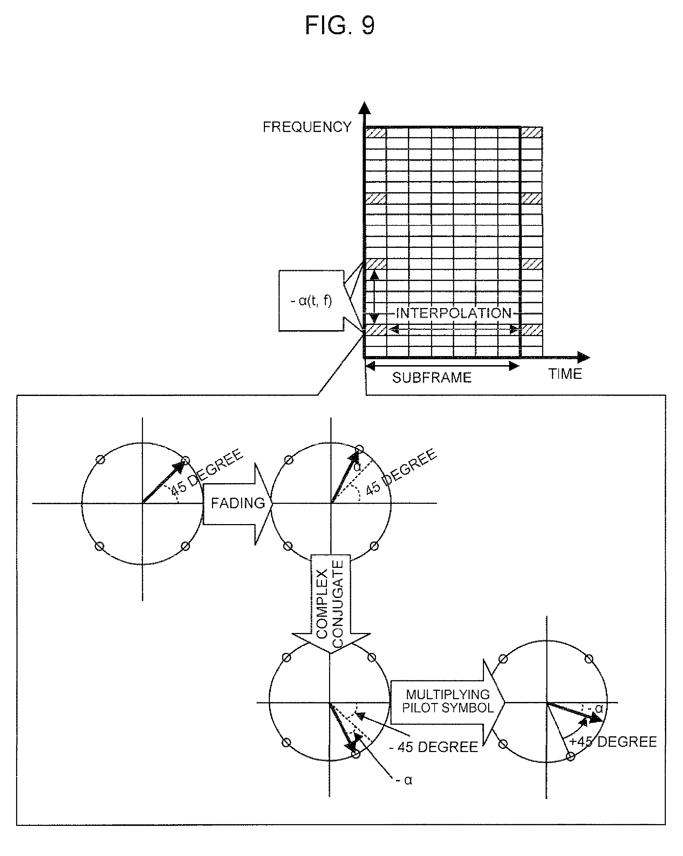

Additionally, in this example, a limit to the detailed method of the channel estimation is not put, and for example, the channel estimation can be carried out with the method as shown in Fig. 9.

On the assumption that the pilot symbol has been transmitted at (1, 1) in a QPSK modulation, the mobile station receives the pilot symbol in which a phase rotation α caused by the fading fluctuation has been added to this. Thereupon, the channel estimating section in the mobile station takes a complex conjugate of the received pilot symbol, and calculates a fading fluctuation portion (-α) by rotating the phase by a pilot symbol portion (1,1) from this point. Multiplying the other received symbols by this value, being a channel estimation result, makes it possible to correct the phase rotation caused by the fading fluctuation. However, in the OFDM transmission, the time/frequency with which the pilot symbol is being transmitted differs from the time/frequency with which the other data symbol is being transmitted, and further, as a rule, the channel characteristic fluctuates responding to the time/frequency. Thus, making a configuration so that after the channel estimation is computed in each pilot symbol within the subframe, the interpolation is made between the neighboring pilot symbols on the frequency axis as well as the time axis, respectively, and the channel estimation is computed in the symbol other than the pilot symbol makes it possible to improve the channel estimation precision as compared with the case of employing a single channel estimation value without making an interpolation.

As explained above, in this example, the pilot pattern that is used is decided responding to the cell size of each base station. And, notifying the pilot pattern, which each base station is using, to the mobile station as a report signal enables the mobile station to carry out the channel estimation based upon the pilot pattern that the base station is using. At this time, the base station, which is expected to have a large delay spread because the cell size is large, uses the pilot pattern with a higher pilot symbol density in the frequency axis direction for a purpose of reducing an influence by the frequency-selectivity fading, thereby allowing the channel estimation precision to be enhanced. On the other hand, the base station, which is expected to have a small delay spread because the cell size is small, uses the pilot pattern with a lower pilot symbol density in the frequency axis direction, thereby allowing the overhead to be reduced, and the utilization efficiency of the radio resources to be enhanced. As a result, the optimum pilot pattern that corresponds to the cell environment is used in each base station, thereby making it possible to enhance the system throughput as well as the user throughput.

### EXAMPLE 2

The example 2 differs from the example 1 in a point of 1)-ii) setting the pilot pattern based upon an average speed of the mobile station, and is identical to the example 1 in a point other that this point.

As explained in the background art, the time fluctuation of the fading differs depending upon the mobile speed of the mobile station, and the faster the mobile speed is, the faster the fading fluctuation pitch becomes. That is, this means that the channel fluctuation within the unit time is large, whereby it is necessary to multiplex the pilot signal in such a manner that the pilot density in the time axis direction is higher, and to enhance the channel estimation precision. On the other hand, that the fading fluctuation pitch is slow means a small channel fluctuation within the unit time, whereby fewer pilot signals should be multiplexed in the time axis direction and, the channel estimation should be carried out by making an interpolation for the block in which no pilot signal exists.

Thereupon, in this example, the pilot pattern is decided responding to an average speed of the mobile station within the cell. Specifically, the plot pattern with a higher pilot density in the time axis direction is used when an average speed of the mobile station within the cell is faster, thereby allowing the channel estimation precision to be enhanced. On the other hand, in the cell in which an average speed of the mobile station is slower, the pilot pattern with a lower pilot density in the time axis direction is used, thereby allowing the overhead due to the pilot signal to be reduced, and the use efficiency of the radio resources to be enhanced.

Further, similarly to the example 1, information associated with the pilot pattern that each base station is using is notified to the mobile stations within the cell as a report signal, and the mobile station carries out the channel estimation by employing the reference pilot pattern until it acquires the pilot pattern information.

### [SYSTEM CONFIGURATION]

A system configuration in the example 2 is identical to that of the example 1, so figures are omitted. However, the cell size of each base station may differ as shown in Fig. 4, and may be almost similar. Further, in the system in the example 2, it is assumed that an average speed of the mobile station in each cell differs. It is assumed that, for example, within the cell 421 of the base station 401 in Fig. 4, railway lines, roads, etc. exist, and a ratio of the mobile stations migrating at a high speed is high, whereas, within the cell 422 of the base station 402, buildings, pedestrian alleys, etc. exist, and a ratio of the mobile stations migrating at a low speed is high.

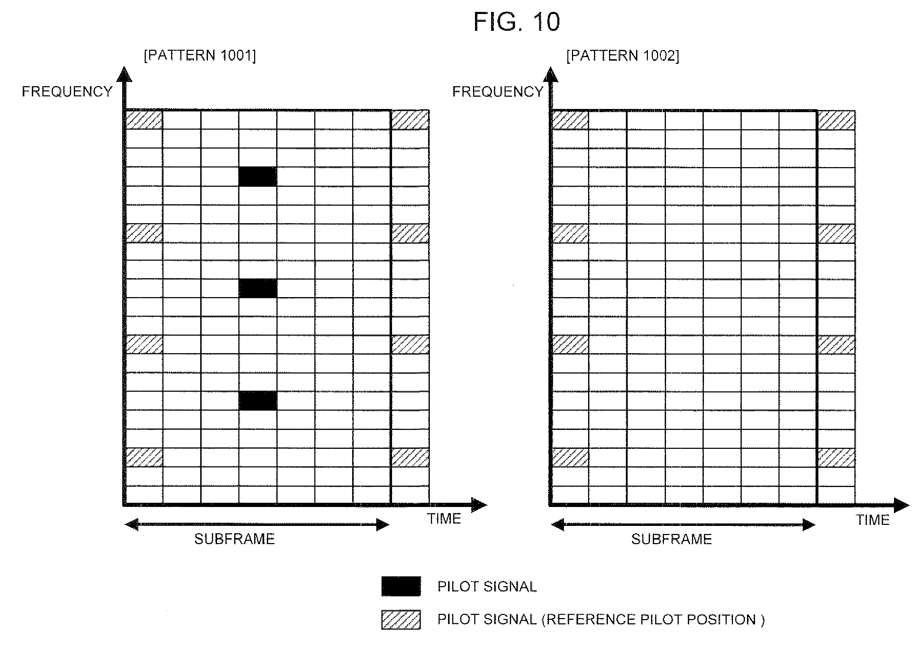

Fig. 10 is a view for explaining the pilot pattern that is employed in this example.

A pattern 1001 is a pilot pattern that the base station 401 is transmitting, and a pattern 1002 is a pilot pattern that the base station 402 is transmitting. Further, the black portion or the oblique-line portion indicates the pilot signal, and the oblique-line portion of both pilot patterns is a reference pilot pattern to which the pilot signal has been multiplexed. The mobile station, at the moment of starting reception of the signal from a new base station, firstly carries out the channel estimation by using the pilot signal multiplexed to the reference pilot pattern, and receives the report signal. The report signal includes information associated with the pilot pattern that this base station is using, whereby the mobile station, upon acquiring this information, is enabled to carry out the channel estimation by employing all pilot signals that this base station is transmitting.

In the cell of the base station 401, the pattern 1001 with a higher pilot signal multiplexing ratio in the time axis direction is used because a ratio of the mobile stations migrating at a high speed is high, whereas, in the cell of the base station 402, the pattern 1002 with a lower pilot signal multiplexing ratio in the time axis direction is used because a ratio of the mobile stations migrating at a low speed is high. At this time, with decision of the pilot pattern, an operator may pre-set the pilot pattern responding to the environment within the cell before establishing the base station, and may estimate an average speed of the mobile station within the cell based upon an observation result, for example, an average time that the mobile station passes through the cell, and a fluctuation in the channel estimation of the pilot signal of the mobile station after starting the operation, thereby to make a switchover to an appropriate pilot pattern. Hereinafter, the case of pre-deciding the pilot pattern being used responding to the cell environment before starting the operation will be explained.

### [BASE STATION]

A configuration or the base station in the example 2 is identical to that of the base station in the example 1. However, the pilot pattern that is used in the base station has been pre-set responding to an average speed of the mobile station within the cell, or environmental factors (geographic conditions) associated with an average speed, and has been recorded as pilot pattern information into the memory. The pilot signal generating section generates a pilot signal that is founded upon the set pilot pattern, the report signal generating section generates a report signal for notifying the pilot pattern information in use, and respective signals are transmitted to the mobile station.

### [MOBILE STATION]

A configuration as well as an operational flow of the mobile station in the example 2 is identical to that of the mobile station in the example 1. That is, when the mobile station has not acquired the pilot pattern information of the base station yet, it carries out the channel estimation based upon the basic pilot pattern, and carries out the channel estimation based upon the pilot pattern that the base station is transmitting after receiving the report signal and acquiring the pilot pattern information.

As explained above, in this example, the pilot pattern being used is decided responding to an average speed of the mobile station existing within the cell of each base station. In addition hereto, notifying the pilot pattern information, which each base station is using, to the mobile station allows the mobile station to carry out the channel estimation based upon the pilot pattern that the base station is transmitting. At this time, when an average speed of the mobile station existing in the cell of a base station is expected to be fast, the above base station uses the pilot pattern with a higher pilot symbol density in the time axis direction in order to reduce an influence by the fading fluctuation, thereby allowing the channel estimation precision to be enhanced. On the other hand, when an average speed of the mobile station existing in the cell of a base station is expected to be slow, the above base station uses the pilot pattern with a lower pilot symbol density in the time axis direction, thereby allowing the overhead to be reduced and the use efficiency of the radio resources to be enhanced. As a result, the optimum pilot pattern that corresponds to the cell 1 environment is used in each base station, thereby making it possible to enhance the system throughput as well as the user throughput.

### EXAMPLE 3

The example 3 differs from the example 1 in a point of 1)-iii) setting the pilot pattern based upon a kind of the channels that are time-multiplexed, and is identical to the example 1 in a point other than this point.

As explained in the problems to be solved by this invention, in the case that the different channel is time-multiplexed subframe by subframe, and resultantly, the mobile station cannot receive the continuous subframes, there is a problem that the channel estimation utilizing the pilot signal of the next subframe cannot be carried out, and the modulation performance deteriorates.

Thereupon, in this example, the pilot pattern is decided responding to a kind of the channels that each base station time-multiplexes. Specifically, when the channel having a different subframe configuration in an identical frequency band is time-multiplexed, the pilot pattern with a higher pilot density in the time axis direction is used, and the interpolation of the channel estimation is made, by employing only the pilot signal within the subframe. On the other hand, when the channel having a different subframe configuration in an identical frequency band is not time-multiplexed, the pilot pattern with a lower pilot density in the time axis direction is used, and the interpolation of the channel estimation employing the pilot signal of the next subframe is made, This makes it possible to enhance the channel estimation precision in the mobile station connected to the base station that is multiplexing and transmitting the different channel, to reduce the overhead of the downlink in the base station that is not multiplexing the different channel, thereby to enhance the use efficiency of the radio resources, and to improve the system throughput as well as the user throughput.

Further, similarly to the example 1, information associated with the pilot pattern that each base station is using is transmitted to the mobile stations within the cell as a report signal, and the mobile station is to carry out the channel estimation by employing the reference pilot pattern until it acquires the pilot pattern information.

### [SYSTEM CONFIGURATION]

A system configuration in the example 3 is identical to that of the example 1, so figures are omitted. However, the cell size of each base station may be differ as shown in Fig. 4, and may be almost similar. Further, in the system in the example 3, it is assumed that the base station 401 in Fig. 4 is transmitting only the unicast channel for transmitting a separate data to each mobile station, whereas the base station 402 is time-multiplexing and transmitting the multicast channel for transmitting an identical data to a plurality of the mobile stations together with the unicast channel as shown in Fig. 11.

Further, it is assumed that the pilot pattern, which the base station in this example transmits, is identical to that of the second example. However, the base station 401 that is transmitting only the unicast channel uses the pattern 1002, and the base station 402 that is time-multiplexing and transmitting the unicast channel and the multicast channel uses the pattern 1001. Similarly to the example 2, the black portion or the oblique-line portion indicates the pilot signal, and the oblique-line portion of both pilot patterns is a reference pilot pattern to which the pilot signal has been multiplexed. The mobile station, at the moment of starting reception of the signal from a new base station, firstly carries out the channel estimation by using the pilot signal multiplexed to the reference pilot pattern, and receives the report signal. The report signal includes information associated with the pilot pattern that this base station is using, whereby the mobile station, upon acquiring this information, is enabled to carry out the channel estimation by employing all pilot signals that this base station is transmitting.

Further, with decision of the pilot pattern that each base station uses, the pilot pattern may be pre-set responding to the method of multiplexing the channel that is expected to be provided by the base station before establishing the base station, and the pilot pattern may be switched when the service being provided has been changed during the operation and a change to the channel being time-multiplexed has been made.

### [BASE STATION]

A configuration of the base station in the example 3 is identical to that of the base station in the example 1. However, the pilot pattern that is used in the base station has been pre-set responding to existence of the channel that the base station time-multiplexes, and has been recorded as pilot pattern information into the memory. And, the pilot signal generating section transmits a pilot signal based upon the set pilot pattern, the report signal generating section generates a report signal for notifying information of the pilot pattern in use, and respective signals are transmitted to the mobile station.

### [MOBILE STATION]

A configuration as well as an operational flow of the mobile station in the example 3 is identical to that of the mobile station in the example 1. That is, until the mobile station decodes the report signal, and acquires the pilot pattern information, it carries out the channel estimation based upon the basic pilot pattern, and when the mobile station acquires the pilot pattern information from the report signal, it carries out the channel estimation based upon the pilot pattern.

As explained above, in this example, a configuration is made so that the pilot pattern being used is changed responding to the channel that each base station time-multiplexes. In addition hereto, notifying information of the pilot pattern, which each base station is using, as a report signal to the mobile station allows the mobile station to carry out the channel estimation based upon the pilot pattern that the base station is transmitting. At this time, in a case where the base station time-multiplexes the different channel, and resultantly, the channel estimation of the next frame cannot be utilized for the interpolation, the base station uses the pilot pattern with a higher pilot symbol density in the time axis direction, thereby allowing the channel estimation precision to be enhanced. The base station other than it uses the pilot pattern with a lower pilot symbol density in the time axis direction, thereby allowing the overhead to be reduced and the use efficiency of the radio resources to be enhanced. As a result, there is an effect that the optimum pilot pattern that corresponds to each base station is used, thereby making it possible to enhance the system throughput as well as the user throughput.

### EXAMPLE 4

In the example 4, the example in which 1)-iv) the pilot pattern is set based upon the pilot pattern that the neighboring base station transmits, and 2)-ii) the mobile station makes a blind determination of the pilot pattern that the base station is using will be explained.

As explained in the problems to be solved by this invention, therein a problem that, when the neighboring cells companions transmit the pilot signal to each other based upon an identical pilot pattern, and yet the transmission timing between the base station companions has been synchronized to a certain extent, the pilot signal that the mobile station existing at the cell edge receives is exposed to strong interference by the pilot signal of the neighboring cell, and the channel estimation precision deteriorates.

Thereupon, in this example, the pilot pattern is set so that each base station uses a pilot pattern that differs from the pilot pattern that is used in the neighboring cell. As a result, it is possible to avoid exposure to strong interference by the pilot signal of the neighboring cell, and to enhance the channel estimation precision. Further, the mobile station, which has information of all pilot pattern candidates, computes correlativity with each pilot pattern, thereby allowing the pilot pattern that the base station is using to be detected.

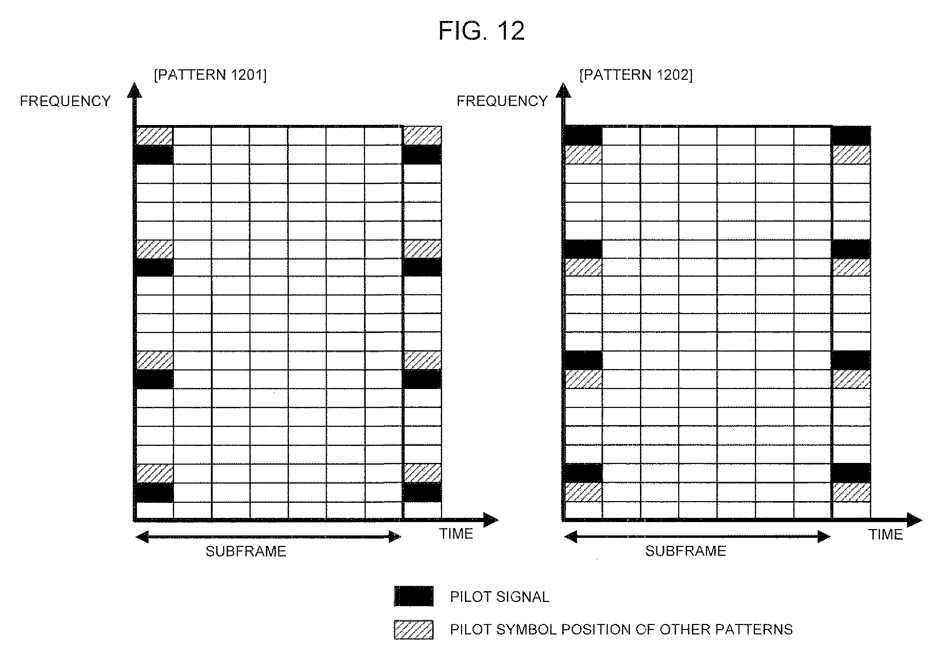

Fig. 12 is a view for explaining the pilot pattern that is employed in this example.

The black portion in the figure indicates a multiplexing point of the pilot symbol, and the setting is made so that a pilot pattern 1201 and a pilot pattern 1202 differ from each other in the position to which the pilot symbol is multiplexed. The mobile station, for a purpose of detecting the pilot pattern that the base station is using, computes a correlative value between each pilot pattern and the reception signal and decides that the pilot pattern of which the correlativity with the reception signal is highest is a pilot pattern that the base station is using. Thus, each base station desirably multiplexes the data symbol so that a correlative value between the data symbol (oblique-line portion of Fig. 12), which is multiplexed to the position corresponding to the pilot symbol position in a pilot pattern that its own station is not using, and the above pilot pattern becomes small. For example, the data symbol, which is multiplexed to such a position, may be pre-subjected to such scrambling that is known to the mobile station and the base station.

### [SYSTEM CONFIGURATION]

A system configuration in the example 4 is identical to that of the example 1, so figures are omitted. However, the cell size of each base station may be differ as shown in Fig. 4, and may be almost similar.

Herein, with decision of the pilot pattern that each base station uses, before establishing the base station, the setting may be made in advance so that the pilot pattern differs for each neighboring cell companion, and the apparatus such as a base station controlling device for taking a radio resource control that spans the base stations within the area may set the pilot pattern.

### [BASE STATION]

A configuration of the base station in the example 4 is identical to that of the base station in the example 1.

### [MOBILE STATION])

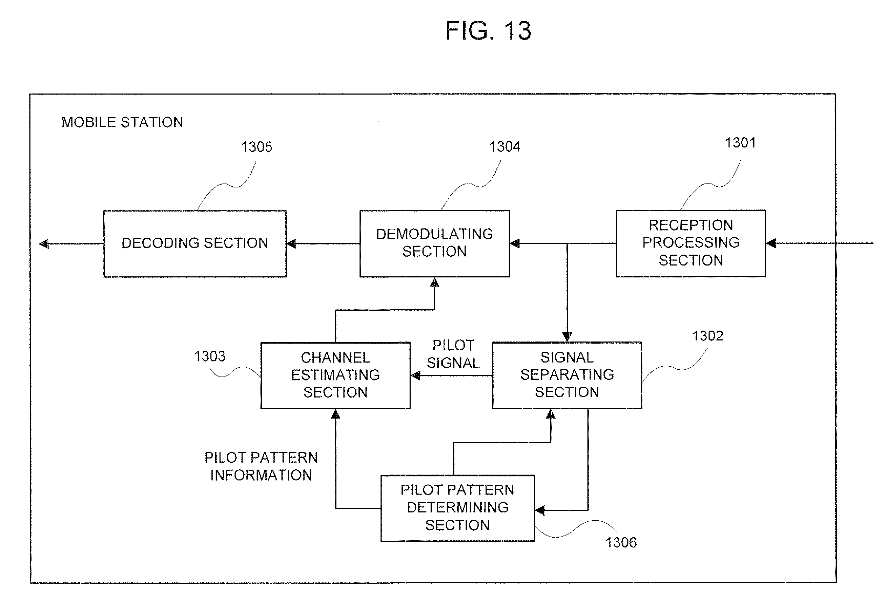

In Fig. 13, a view for explaining a configuration of the mobile station in the example 4 is shown. The point in which the mobile station in the example 4 differs from that of the example 1 is a point that a pilot pattern estimating section exists. The pilot pattern estimating section receives a reception signal having a possibility that the pilot symbol thereof has been multiplexed from the signal separating section, pre-computes correlativity with each of the known pilot pattern candidates, and determines that the pilot pattern of which the correlative value with the reception signal is highest is a pilot pattern that the base station is using. A determination result is notified to the signal separating section as well as the channel estimating section, and the signal separating section as well as the channel estimating section carries out the channel estimation from a reception symbol that corresponds to the notified pilot pattern, and an estimation result is used for demodulation in the demodulating section.

Fs explained above, in this example, a configuration is made so that the different pilot pattern can be used between the neighboring cells, and the mobile station makes a blind determination of the pilot pattern that the base station is using, from among the pilot pattern candidates that could be used. As a result, there is an effect that exposure to strong interference by the pilot signal of the neighboring cell can be avoided, and the system throughput as well as the user throughput can be enhanced owing to an enhancement in the channel estimation precision.

### EXAMPLE 5

The example 5 is an example in which 1)-i) the pilot pattern is set based upon the delay spread of the cell, and 2)-ii) the mobile station makes a blind determination of the pilot pattern that the base station is using. In this case, the system as well as the base station in the example 1, and the mobile station in the example 4 should be combined.

### EXAMPLE 6

The example 6 is an example in which 1)-ii) the pilot pattern is set based upon an average speed of the mobile station, and 2)-ii) the mobile station makes a blind determination of the pilot pattern that the base station is using. In this case, the system as well as the base station in the example 2, and the mobile station in the example 4 should be combined.

### EXAMPLE 7

The example 7 is an example in which 1)-iii) the pilot pattern is set based upon a kind of the channels being time-multiplexed, and 2)-ii) the mobile station makes a blind determination of the pilot pattern that the base station is using. In this case, the system as well as the base station in the example 3, and the mobile station in the example 4 should be combined.

As explained above, the present invention makes it possible to use the pilot pattern of the common pilot signal suitable for each base station responding to the cell environment and a service being provided, and thus, makes it possible to enhance use efficiency of the radio resources while enhancing the channel estimation precision. Thus, an effect that the system throughput and the user throughput are improved is obtained. Further, in accordance with the other embodiments of the present invention, it becomes possible to use the pilot pattern that differs for each neighboring cells, thus, enabling interference due to a collision of the pilot symbol companions between the neighboring cells to be reduced, which gives rise to an effect that the channel estimation precision is enhanced, and the system throughput as well as the user throughput is improved.

## Claims

1. A pilot signal transmitting method, **characterized in** comprising:
a step in which a base station transmits a common pilot signal to one mobile station or more based upon a pattern that is included in a predetermined signal pattern candidate;
a step in which said mobile station identifies the pattern of the common pilot signal that said base station transmits; and
a step in which said mobile station receives said common pilot signal based upon said identified pattern.

2. A pilot signal transmitting method according to claim 1, **characterized in** deciding the pattern of the common pilot signal that said base station uses, responding to a cell environment of said base station.

3. A pilot signal transmitting method according to claim 1, **characterized in** deciding the pattern of the common pilot signal that said base station uses, responding to a delay spread of a cell of said base station.

4. A pilot signal transmitting method according to claim 3, **characterized in** deciding the pattern of the common pilot signal that said base station uses, responding to a cell size of said base station.

5. A pilot signal transmitting method according to claim 1, **characterized in** deciding the pattern of the common pilot signal that said base station uses, responding to a speed of the mobile station existing within a cell of said base station.

6. A pilot signal transmitting method according to claim 1, **characterized in** deciding the pattern of the common pilot signal that said base station uses, responding to a kind of channels that said base station transmits.

7. A pilot signal transmitting method according to claim 1, **characterized in** deciding the pattern of the common pilot signal that said base station uses, responding to the pattern of the common pilot signal that a base station neighboring said base station transmits.

8. A pilot signal transmitting method according to claim 1, **characterized in that** said signals pattern is information for specifying a number of pilot symbols that are multiplexed within a unit transmission time in a predetermined transmission frequency.

9. A pilot signal transmitting method according to claim 1, **characterized in that** said signal pattern is information for specifying a number of pilot symbols that are multiplexed within a unit transmission frequency at a predetermined transmission timing.

10. A pilot signal transmitting method according to claim 1, **characterized in that**, in a radio communication system based upon an orthogonal Frequency Division Multiplexing (OFDM) technique, said signal pattern is defined as a pattern of a pilot symbol that is multiplexed within a predetermined unit transmission time as well as a frequency grid.

11. A pilot signal transmitting method according to claim 1, **characterized in that** said base station notifies information associated with said pattern of said common pilot signal, which said base station is transmitting, to the mobile station with a downlink channel.

12. A pilot signal transmitting method according to claim 11, **characterized in that** said downlink channel is a broadcast channel that is transmitted to the mobile station existing within a cell of said base station.

13. A pilot signal transmitting method according to claim 11, **characterized in that:**
said signal pattern candidate includes a reference pattern known to said mobile station; and
said mobile station receives the common pilot signal based upon said reference pattern before acquiring information associated with the pattern of the common pilot signal that said base station is transmitting.

14. A pilot signal transmitting method according to claim 13, **characterized in that** said reference pattern is a pattern based upon a symbol position that is included in all patterns of said pattern candidates in common.

15. A pilot signal transmitting method according to claim 1, **characterized in that** said mobile station identifies the pattern of the common pilot signal that said base station is transmitting, based upon information associated with said signal pattern candidate, and a reception signal from said base station.

16. A pilot signal transmitting method according to claim 15, **characterized in that,** so as to allow correlativity with a pilot signal sequence based upon a not-yet-used signal pattern to lower, said base station multiplexes a data symbol in a position where an overlap with said not-yet-used signal pattern is generated.

17. A pilot signal transmitting method according to claim **16**, **characterized in that** said base station multiplies the data symbol, which is multiplexed to a position where an overlap with said not-yet-used signal pattern is generated, by a bit sequence known to said mobile station, and transmits it.

18. A radio communication system, **characterized in** comprising:
a base station comprising a pilot signal transmitting means for transmitting a common pilot signal to one mobile station or more based upon a pattern that is included in a predetermined signal pattern candidate; and
a mobile station comprising an identifying means for identifying the pattern of the common pilot signal that said base station transmits, and a common pilot signal receiving means for receiving said common pilot signal based upon said identified pattern.

19. A radio communication system according to claim 18, **characterized in that** said pilot signal transmitting means decides the pattern of the common pilot signal that said base station uses, responding to a cell environment of the base station.

20. A radio communication system according to claim 18, **characterized in that** said pilot signal transmitting means decides the pattern of the common pilot signal that said base station uses, responding to a delay spread of a cell of the base station.

21. A radio communication system according to claim 20, **characterized in that** said pilot signal transmitting means decides the pattern of the common pilot signal that said base station uses, responding to a cell size of said base station.

22. A radio communication system according to claim 18, **characterized in that** said pilot signal transmitting means decides the pattern of the common pilot signal that said base station uses, responding to a speed of the mobile station existing within a cell of said base station.

23. A radio communication system according to claim 18, **characterized in that** said pilot signal transmitting means decides the pattern of the common pilot signal that said base station uses, responding to a kind of channels that said base station transmits.

24. A radio communication system according to claim 18, **characterized in that** said pilot signal transmitting means decides the pattern of the common pilot signal that said base station uses, responding to the pattern of the common pilot signal that a base station neighboring said base station transmits.

25. A radio communication system according to claim 18, **characterized in that** said signal pattern is information for specifying a number of pilot symbols that are multiplexed within a unit transmission time in a predetermined transmission frequency.

26. A radio communication system according to claim 18, **characterized in that** said signal pattern is information for specifying a number of pilot symbols that are multiplexed within a unit transmission frequency at a predetermined transmission timing.

27. A radio communication system according to claim 18, **characterized in that**, in a radio communication system based upon an orthogonal Frequency Division Multiplexing (OFDM) technique, said signal pattern is defined as a pattern of a pilot symbol that is multiplexed within a predetermined unit transmission time as well as a frequency grid.

28. A radio communication system according to claim 18, **characterized in that** said base station comprises a means for notifying information associated with said pattern of said common pilot signal, which said base station is transmitting, to the mobile station with a downlink channel.

29. A radio communication system according to claim 28, **characterized in that** said downlink channel is a broadcast channel that is transmitted to the mobile station existing within a cell of said base station.

30. A radio communication system according to claim 28, **characterized in that:**
said signal pattern candidate includes a reference pattern known to said mobile station; and
said common pilot signal receiving means of said mobile station receives the common pilot signal based upon said reference pattern before acquiring information associated with the pattern of the common pilot signal that said base station is transmitting.

31. A radio communication system according to claim 30, **characterized in that** said reference pattern is a pattern based upon a symbol position that is included in all patterns of said pattern candidates in common.

32. A radio communication system according to claim 18, **characterized in that** said identifying means of said mobile station identifies the pattern of the common pilot signal that said base station is transmitting, based upon information associated with said signal pattern candidate, and a reception signal from said base station.

33. A radio communication system according to claim 32, **characterized in that**, so as to allow correlativity with a pilot signal sequence based upon a not-yet-used signal pattern to lower, said pilot signal transmitting means of said base station multiplexes a data symbol in a position where an overlap with said not-yet-used signal pattern is generated.

34. A radio communication system according to claim 32, **characterized in that** said pilot signal transmitting means of said base station multiplies the data symbol, which is multiplexed to a position where an overlap with said not-yet-used signal pattern is generated, by a bit sequence known to said mobile station, and transmits it.

35. A base station in a radio communication system in which a mobile station identifies a pattern of a common pilot signal that is transmitted from the base station, and receives said common pilot signal based upon said identified pattern, **characterized in** comprising a means for transmitting the common pilot signal to one mobile station or more based upon the pattern that is included in a predetermined signal pattern candidate.

36. A program of a base station in a radio communication system in which a mobile station identifies a pattern of a common pilot signal that is transmitted from the base station, and receives said common pilot signal based upon said identified pattern, **characterized in** causing the base station to execute a process of transmitting the common pilot signal to one mobile station or more based upon the pattern that is included in a predetermined signal pattern candidate.

37. A program of a mobile station in a radio communication system in which a base station transmits a common pilot signal to one mobile station or more based upon a pattern that is included in a predetermined signal pattern candidate, **characterized in** causing the mobile station to execute the processes:
identifying the pattern of the common pilot signal that the base station transmits; and
receiving said common pilot signal based upon said identified pattern.
